(19) Europäisches Patentamt
European Patent Office
Office européen des brevets

(11) **EP 3 085 286 B1**

(12) **EUROPEAN PATENT SPECIFICATION**

(45) Date of publication and mention
of the grant of the patent:
**02.05.2018 Bulletin 2018/18**

(51) Int Cl.:
***A47J 37/07*** *(2006.01)*

(21) Application number: **16159523.6**

(22) Date of filing: **09.03.2016**

(54) **COAL TRAY ASSEMBLY OF A BARBECUE GRILL**

KOHLENBEHÄLTERANORDNUNG EINER GRILLVORRICHTUNG

ENSEMBLE PLATEAU DE CHARBON D'UN GRIL DE BARBECUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2015 TW 104112951**

(43) Date of publication of application:
**26.10.2016 Bulletin 2016/43**

(73) Proprietor: **Industro International Co., Ltd.
Taichung City 407 (TW)**

(72) Inventor: **Huang, Kuo-Chan
407 Taichung City (TW)**

(74) Representative: **Lang, Christian
LangPatent Anwaltskanzlei
IP Law Firm
Rosenheimer Straße 139
81671 München (DE)**

(56) References cited:
**CN-U- 202 287 895      US-A- 4 724 753
US-A- 5 359 988        US-A1- 2010 116 262
US-B1- 8 739 380**

## Description

BACKGROUND OF INVENTION

1. FIELD OF INVENTION

The present invention relates to a barbecue grill and, more particularly, to a coal tray assembly of a barbecue grill.

2. RELATED PRIOR ART

Barbecue provides food and fun for people. There are various types of equipment and utensils to facilitate barbecue. For example, a grill is disclosed in Taiwanese Patent M448235 or in the document US2010/0116262 A1. The grill includes a bowl 10 and a grid 20. The bowl 10 includes a bottom plate 12, vents 121 in the bottom plate 12, and several brackets 13 on an internal side. Coal is filled in the bowl 10, on the bottom plate 12. The coal is ignited before the grid 20 is inserted in the bowl 10, on the brackets 13. Then, food is cooked on the grid 20. The coal is burnt and consumed as the cooking goes on. If the cooking is to be continued, fresh coal must be filled into the bowl 10. Such refilling can only be done after lifting the grid 20 from the bowl 10, and such lifting of the grid 20, on which food might be cooked, is inconvenient.

The present invention is therefore intended to obviate or at least alleviate the problems encountered in prior art.

SUMMARY OF INVENTION

It is the primary objective of the present invention to provide a convenient-to-use coal tray assembly of a barbecue grill.

To achieve the foregoing objective, the coal tray assembly includes two trays each including a rim formed on a bottom plate. The rim includes two planar plates connected to each other so that an angle of less than 180° is defined between the planar plates on an internal side of the rim. One of the planar plates of each of the trays works with a corresponding one of the first and second planar plates of the other tray to clamp a post. One of the planar plates of each of the trays is pivotally connected to the corresponding planar plate of the other tray.

Other objectives, advantages and features of the present invention will be apparent from the following description referring to the attached drawings.

BRIEF DESCRIPTION OF DRAWINGS

The present invention will be described via detailed illustration of the preferred embodiment referring to the drawings wherein:

FIG. 1 is an exploded view of a coal tray assembly according to the preferred embodiment of the present invention;
FIG. 2 is a top view of the coal tray assembly shown in FIG. 1;
FIG. 3 is an enlarged, partial, cross-sectional view of the coal tray assembly shown in FIG. 1;
FIG. 4 is a perspective view of a barbecue equipped with the coal tray assembly shown in FIG. 1; and
FIG. 5 is an enlarged, partial, cross-sectional view of the barbecue grill shown in FIG. 4.

DETAILED DESCRIPTION OF PREFERRED EMBODIMENT

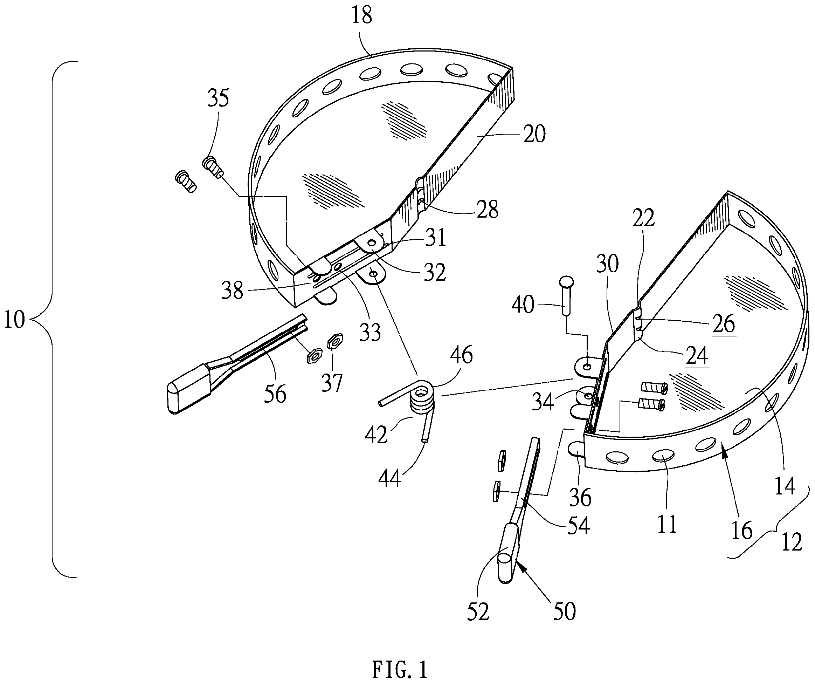

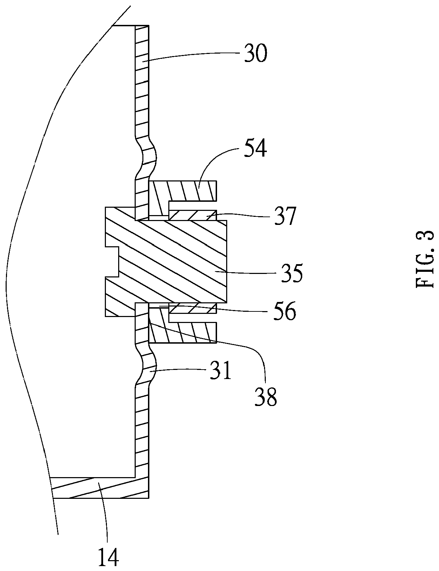

Referring to FIGS. 1 through 3, a coal tray assembly 10 includes two trays 12, a fastener 40, a torque spring 42 and two handles 50 according to the preferred embodiment of the present invention. The trays 12 are pivotally connected to each other by the fastener 40. Each of the handles 50 is secured to a corresponding one of the trays 12. The torque spring 42 is located between the handles 50.

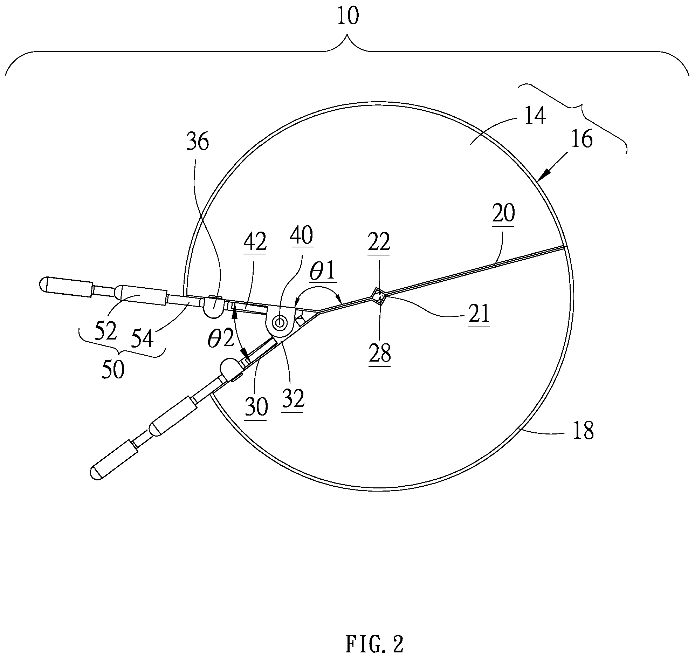

Each of the trays 12 looks like a mirror image to the other tray 12 as shown in FIG. 2. Each of the trays 12 includes a rim 16 formed on a bottom plate 14. The rim 16 includes an arched plate 18 and two planar plates 20 and 30. The arched plate 18 is made with vents 11. The arched plate 18 includes an end connected to an end of the planar plate 20 and another end connected to an end of the planar plate 30. In the tray 12, there is an angle θ1 smaller than 180° between the planar plate 20 and the planar plate 30.

Another end of the planar plate 20 is connected to another end of the planar plate 30. The planar plate 20 includes a semi-tube 21 formed with a concave face 22 extending outside the tray 12 and a convex face 24 extending in the tray 12. The semi-tube 21 includes two bosses 28 formed on the concave face 22.

The planar plate 30 includes two fins 36 near the arched plate 18 and two lugs 32 near the planar plate 20. Each of the lugs 32 is made with an aperture 34. The planar plate 30 further includes two ribs 31 extending outside the tray 12, a groove 38 defined by and between the ribs 31, and apertures 33 between the ribs 31.

Each of the handles 50 includes a grip 52 located on a section, a shank 54 extending outside the grip 52, and a slot 56 longitudinally made in the shank 54. The shank 54 of each of the handles 50 is inserted in the groove 38 of the corresponding planar plate 30. The shank 54 of each of the handles 50 is secured to the corresponding planar plate 30 by inserting two threaded bolts 35 in the slot 56 of the former and the apertures 33 of the latter. Each of the fasteners 35 is engaged with a corresponding nut 37.

The torque spring 42 includes two rectilinear portions 44 extending from a helical portion 46. Each of the rectilinear portions 44 of the torque spring 42 is located against the shank 54 of a corresponding one of the handles 50. The helical portion 46 of the torque spring 42 is located between the lugs 32 of the planar plate 30 of the rim 16 of each of the trays 12.

The fastener 40 is preferably a rivet. The fastener 40 can be a pin, a threaded bolt or any other proper element in another embodiment. The fastener 40 is inserted in the apertures 34 of the lugs 32 of the trays 12 and the helical portion 46 of the torque spring 42. Thus, the trays 12 are pivotally connected to each other.

Normally, the planar plates 20 are placed against each other while the planar plates 30 are kept away from each other by the torque spring 42. Thus, there is a space (not numbered) defined by and between the semi-tubes 21 in contact with each other. Furthermore, there is an angle θ2 determined by the following equation:

$$\theta 2 = 360° - (\theta 1 \times 2).$$

The handles 50 are operable to close the planar plates 30 and hence open the planar plates 20. Accordingly, the semi-tubes 21 are separated from each other. At this moment, the torque spring 42 is loaded.

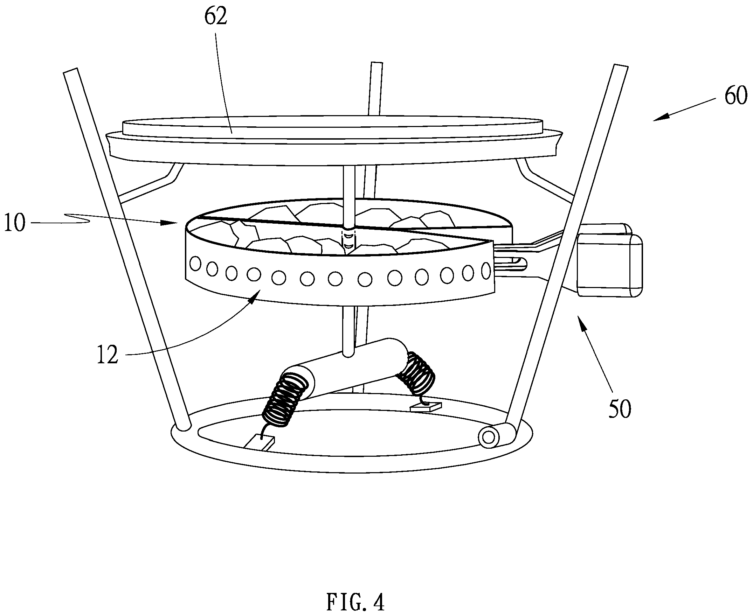

Referring to FIG. 4, there is a barbecue grill that includes a stand 60 and a grid 62 in addition to the coal tray assembly 10. The stand 60 includes a central post 64 and at least three peripheral posts (not numbered). The central post 64 is made with recesses 66. The grid 62 is supported on the periphery posts. The coal tray assembly 10 is supported on the central post 64. That is, the central post 64 is clamped by the coal tray assembly 10. In detail, the central post 64 is clamped by the planar plates 20, which are closed as the planar plates 30 are kept open the torque spring 42.

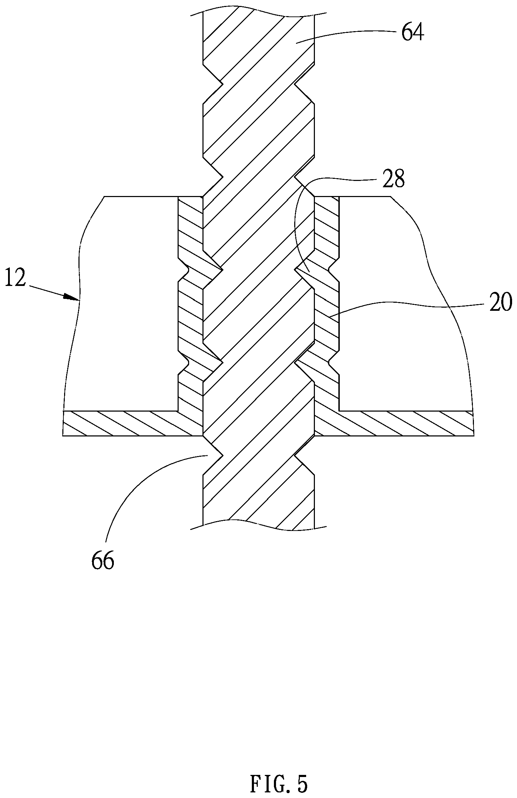

Referring to FIG. 5, the central post 64 is inserted in the space, which is defined by and between the semi-tubes 21 in contact with each other. The bosses 28 are selectively inserted in some of the recesses 66 to keep the coal tray assembly 10 at a selected level on the central post 64, i.e., at a desired distance from the grid 62.

As mentioned, the handles 50 can be operated to open the planar plates 20. Therefore, the coal tray assembly 10 can be detached from the central post 64 and be filled with coal without having to remove the grid 62, which probably carries food on the grid 62, from the peripheral posts. This is convenient.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

**Claims**

1. A coal tray assembly comprising two trays (12) each comprising:

   a bottom plate (14); and
   a rim (16) formed on the bottom plate (14), wherein the rim (16) comprises a first planar plate (20) and a second planar plate (30) connected to the first planar plate (20) so that an angle (θ1) of less than 180° is defined between the first and second planar plates (20/30) on an internal side of the rim (16), **characterized in that** one of the first and second planar plates (20/30) of each of the trays (12) works with a corresponding one of the first and second planar plates (20/30) of the other tray (12) to clamp a post (64), wherein one of the first and second planar plates (20/30) of each of the trays (12) is pivotally connected to the corresponding planar plate (20/30) of the other tray (12).

2. The coal tray assembly according to claim 1, wherein the first planar plate (20) of each of the trays (12) works with the first planar plate (20) of the other tray (12) to clamp the post (64) while the second planar plate (30) of each of the trays (12) is pivotally connected to the second planar plate (30) of the other tray (12).

3. The coal tray assembly according to claim 2, further comprising a fastener (40) for pivotally connecting the second planar plates (30) of the trays (12) to each other.

4. The coal tray assembly according to claim 3, further comprising a spring (42) located between and connected to the second planar plates (30) of the trays (12).

5. The coal tray assembly according to claim 4, wherein the spring (42) keeps the second planar plates (30) of the trays (12) from each other while keeping the first planar plates (20) of the trays (12) close to each other.

6. The coal tray assembly according to claim 5, wherein the spring (42) is a torque spring.

7. The coal tray assembly according to claim 6, wherein the spring (42) comprises a helical portion (46) and two rectilinear portions (44) extending from the helical portion (46) to abut against the second planar plate (30) of a corresponding one of the trays (12).

8. The coal tray assembly according to claim 7, wherein the fastener (40) is inserted in the helical portion (46) of the spring (42).

**9.** The coal tray assembly according to claim 8, wherein each of the trays (12) comprises at least one lug (32) formed on the second planar plate (30), wherein the fastener (40) is inserted in the lugs (32) of the trays (12).

**10.** The coal tray assembly according to claim 9, wherein each of the trays (12) comprises two lugs (32) formed on the second planar plate (30), wherein the fastener (40) is inserted in the lugs (32) of the trays (12).

**11.** The coal tray assembly according to claim 2, wherein each of the trays (12) comprises a semi-tube (21) formed on the first plate (20) so that the semi-tubes (21) of the trays (12) cooperate with each other to make a tubular space for receiving the post (64).

**12.** The coal tray assembly according to claim 11, wherein each of the trays (12) comprises at least one boss (28) formed on the semi-tube (21) and used for insertion in at least one recess (66) made in the post (64).

**13.** The coal tray assembly according to claim 2, further comprising two handles (50) each connected to the second planar plate (30) of a corresponding one of the trays (12).

**14.** The coal tray assembly according to claim 13, wherein each of the handles (50) comprises a grip (52) and a shank (54) secured to the grip (52) at an end and secured to the second planar plate (30) of the corresponding tray (12) at another end.

**15.** The coal tray assembly according to claim 14, wherein each of the trays (12) comprises two ribs (31) formed on the second planar plate (30), wherein the shank (54) of each of the handles (50) is located between the ribs (31) of the corresponding tray (12).

**16.** The coal tray assembly according to claim 14, further comprising two fasteners (35/37) each for securing the shank (54) of a corresponding one of the handles (50) to the second planar plate (30) of the corresponding tray (12).

**17.** The coal tray assembly according to claim 16, wherein each of the handles (50) comprises a slot (56) in the shank (54), wherein each of the trays (12) comprises an aperture (33) in the second planar plate (30), wherein each of the fasteners (35/37) is inserted in the slot (56) of the corresponding handle (50) and the aperture (33) of the second planar plate (30) of the corresponding tray (12).

**Patentansprüche**

**1.** Kohlenschalenanordnung mit zwei Schalen (12), von denen jede:

eine Bodenplatte (14), und
einen Rand (16) umfasst, der an der Bodenplatte (14) ausgebildet ist, wobei der Rand (16) eine erste Planarplatte (20) und eine zweite Planarplatte (30) umfasst, die mit der ersten Planarplatte (20) so verbunden ist, dass ein Winkel ($\theta$1) von weniger als 180° zwischen der ersten und der zweiten Planarplatte (20/30) an einer Innenseite des Rands (16) definiert ist,
**dadurch gekennzeichnet, dass** entweder die erste oder die zweite Planarplatte (20/30) von jeder der Schalen (12) mit einer Korrespondierenden der ersten oder zweiten Planarplatte (20/30) der anderen Schale (12) zusammenarbeitet, um eine Stange (64) festzuklemmen, wobei entweder die erste oder die zweite Planarplatte (20/30) von jeder der Schalen (12) schwenkbar mit der korrespondierenden Planarplatte (20/30) der anderen Schale (12) verbunden ist.

**2.** Kohlenschalenanordnung nach Anspruch 1, bei welcher die erste Planarplatte (20) von jeder der Schalen (12) mit der ersten Planarplatte (20) der anderen Schale (12) zusammenarbeitet, um die Stange (64) festzuklemmen, während die zweite Planarplatte (30) von jeder der Schalen (12) schwenkbar mit der zweiten Planarplatte (30) der anderen Schale (12) verbunden ist.

**3.** Kohlenschalenanordnung nach Anspruch 2, welche ferner ein Befestigungselement (40) umfasst, um die zweiten Planarplatten (30) der Schalen (12) schwenkbar miteinander zu verbinden.

**4.** Kohlenschalenanordnung nach Anspruch 3, welche ferner eine Feder (42) umfasst, die zwischen den zweiten Planarplatten (30) der Schalen (12) angeordnet und mit diesen verbunden ist.

**5.** Kohlenschalenanordnung nach Anspruch 4, bei welcher die Feder (42) die zweiten Planarplatten (30) der Schalen (12) voneinander fernhält, während sie die ersten Planarplatten (20) der Schalen (12) nahe beieinander hält.

**6.** Kohlenschalenanordnung nach Anspruch 5, bei welcher die Feder (42) eine Drehmomentfeder ist.

**7.** Kohlenschalenanordnung nach Anspruch 6, bei welcher die Feder (42) einen schraubförmigen Abschnitt (46) und zwei geradlinige Abschnitte (44) umfasst, die sich von dem schraubförmigen Abschnitt (46) erstrecken, um an der zweiten Planarplatte (30) einer Korrespondierenden der Schalen (12) anzuliegen.

8. Kohlenschalenanordnung nach Anspruch 7, bei welcher das Befestigungselement (40) in den schraubenförmigen Abschnitt (46) der Feder (42) eingesteckt ist.

9. Kohlenschalenanordnung nach Anspruch 8, bei welcher jede der Schalen (12) wenigstens eine Lasche (32) umfasst, die an der zweiten Planarplatte (30) ausgebildet ist, wobei das Befestigungselement (40) in die Laschen (32) der Schalen (12) eingesteckt ist.

10. Kohlenschalenanordnung nach Anspruch 9, bei welcher jede der Schalen (12) zwei Laschen (32) umfasst, die an der zweiten Planarplatte (30) ausgebildet sind, wobei das Befestigungselement (40) in die Laschen (32) der Schalen (12) eingesteckt ist.

11. Kohlenschalenanordnung nach Anspruch 2, bei welcher jede der Schalen (12) ein Halbrohr (21) umfasst, das an der ersten Platte (20) so ausgebildet ist, dass die Halbrohre (21) der Schalen (12) miteinander zusammenwirken, um einen rohrförmigen Raum zur Aufnahme der Stange (64) zu bilden.

12. Kohlenschalenanordnung nach Anspruch 11, bei welcher jede der Schalen (12) wenigstens einen Buckel (28) umfasst, der an dem Halbrohr (21) ausgebildet ist und zum Einschieben in wenigstens eine in der Stange (64) ausgebildete Vertiefung (66) dient.

13. Kohlenschalenanordnung nach Anspruch 2, welche ferner zwei Griffe (50) umfasst, von denen jeder mit der zweiten Planarplatte (30) einer Korrespondierenden der Schalen (12) verbunden ist.

14. Kohlenschalenanordnung nach Anspruch 13, bei welcher jeder der Griffe (50) einen Handgriff (52) und einen Schaft (54) umfasst, dessen eines Ende an dem Handgriff (52) fixiert ist und dessen anderes Ende an der zweiten Planarplatte (30) der korrespondierenden Schale (12) fixiert ist.

15. Kohlenschalenanordnung nach Anspruch 14, bei welcher jede der Schalen (12) zwei Rippen (31) umfasst, die an der zweiten Planarplatte (30) ausgebildet sind, wobei der Schaft (54) von jedem der Griffe (50) zwischen den Rippen (31) der korrespondierenden Schale (12) angeordnet ist.

16. Kohlenschalenanordnung nach Anspruch 14, welche ferner zwei Befestigungselemente (35/37) umfasst, wobei jedes davon dazu dient, um den Schaft (54) eines Korrespondierenden der Griffe (50) an der zweiten Planarplatte (30) der korrespondierenden Schale (12) zu befestigen.

17. Kohlenschalenanordnung nach Anspruch 16, bei welcher jeder der Griffe (50) einen Schlitz (56) in dem Schaft (54) umfasst, wobei jede der Schalen (12) eine Öffnung (33) in der zweiten Planarplatte (30) aufweist, wobei jedes der Befestigungselemente (35/37) in den Schlitz (56) des korrespondierenden Griffs (50) und die Öffnung (33) der zweiten Planarplatte (30) der korrespondierenden Schale (12) eingesetzt ist.

**Revendications**

1. Ensemble de plateaux de charbon comprenant deux plateaux (12), chacun d'eux comprenant:

   une plaque inférieure (14); et
   un bord (16) formé sur la plaque inférieure (14), dans lequel le bord (16) comprend une première plaque plane (20) et une deuxième plaque plane (30) raccordée à la première plaque plane (20), de sorte qu'un angle (θ1) inférieur à 180° soit défini entre les première et deuxième plaques planes (20/30) sur un côté interne du bord (16), **caractérisé en ce que** l'une des première et deuxième plaques planes (20/30) de chacun des plateaux (12) collabore avec l'une correspondante des première et deuxième plaques planes (20/30) de l'autre plateau (12) pour fixer un montant (64), dans lequel l'une des première et deuxième plaques planes (20/30) de chacun des plateaux (12) est raccordée, de manière à pouvoir pivoter, à la plaque plane correspondante (20/30) de l'autre plateau (12).

2. Ensemble de plateaux de charbon selon la revendication 1, dans lequel la première plaque plane (20) de chacun des plateaux (12) collabore avec la première plaque plane (20) de l'autre plateau (12) pour fixer le montant (64) pendant que la deuxième plaque plane (30) de chacun des plateaux (12) est raccordée, de manière à pouvoir pivoter, à la deuxième plaque plane (30) de l'autre plateau (12).

3. Ensemble de plateaux de charbon selon la revendication 2, comprenant en outre une fixation (40) pour raccorder, de manière à pouvoir pivoter, les deuxièmes plaques planes (30) des plateaux (12) l'une à l'autre.

4. Ensemble de plateaux de charbon selon la revendication 3, comprenant en outre un ressort (42) situé entre les deuxièmes plaques planes (30) des plateaux (12) et raccordé à celles-ci.

5. Ensemble de plateaux de charbon selon la revendication 4, dans lequel le ressort (42) maintient les deuxièmes plaques planes (30) des plateaux (12) éloignées l'une de l'autre tout en maintenant les premières plaques planes (20) des plateaux (12) proches l'une de l'autre.

6. Ensemble de plateaux de charbon selon la revendication 5, dans lequel le ressort (42) est un ressort de serrage.

7. Ensemble de plateaux de charbon selon la revendication 6, dans lequel le ressort (42) comprend une portion hélicoïdale (46) et deux portions rectilignes (44) s'étendant de la portion hélicoïdale (46) pour venir en butée contre la deuxième plaque plane (30) de l'un correspondant des plateaux (12).

8. Ensemble de plateaux de charbon selon la revendication 7, dans lequel la fixation (40) est insérée dans la portion hélicoïdale (46) du ressort (42).

9. Ensemble de plateaux de charbon selon la revendication 8, dans lequel chacun des plateaux (12) comprend au moins un ergot (32) formé sur la deuxième plaque plane (30), dans lequel la fixation (40) est insérée dans les ergots (32) des plateaux (12).

10. Ensemble de plateaux de charbon selon la revendication 9, dans lequel chacun des plateaux (12) comprend deux ergots (32) formés sur la deuxième plaque plane (30), dans lequel la fixation (40) est insérée dans les ergots (32) des plateaux (12).

11. Ensemble de plateaux de charbon selon la revendication 2, dans lequel chacun des plateaux (12) comprend un demi-tube (21) formé sur la première plaque (20) de sorte que les demi-tubes (21) des plateaux (12) coopèrent l'un avec l'autre pour établir un espace tubulaire pour la réception du montant (64).

12. Ensemble de plateaux de charbon selon la revendication 11, dans lequel chacun des plateaux (12) comprend au moins un bossage (28) formé sur le demi-tube (21) et utilisé pour l'insertion dans haut moins un évidement (66) constitué dans le montant (64).

13. Ensemble de plateaux de charbon selon la revendication 2, comprenant en outre deux poignées (50), chacune d'elles étant raccordée à la deuxième plaque plane (30) de l'un correspondant des plateaux (12).

14. Ensemble de plateaux de charbon selon la revendication 13, dans lequel chacune des poignées (50) comprend une prise (52) et une tige (54) fixée à la prise (52) à une extrémité et fixée à la deuxième plaque plane (30) du plateau correspondant (12) à une autre extrémité.

15. Ensemble de plateaux de charbon selon la revendication 14, dans lequel chacun des plateaux (12) comprend deux nervures (31) formées sur la deuxième plaque plane (30), dans lequel la tige (54) de chacune des poignées (50) est située entre les nervures (31) du plateau correspondant (12).

16. Ensemble de plateaux de charbon selon la revendication 14, comprenant en outre deux fixations (35/37), chacune d'elles fixant la tige (54) de l'une correspondante des poignées (50) à la deuxième plaque plane (30) du plateau correspondant (12).

17. Ensemble de plateaux de charbon selon la revendication 16, dans lequel chacune des poignées (50) comprend une fente (56) dans la tige (54), dans lequel chacun des plateaux (12) comprend une ouverture (33) dans la deuxième plaque plane (30), dans lequel chacune des fixations (35/37) est insérée dans la fente (56) de la poignée correspondante (50) et l'ouverture (33) de la deuxième plaque plane (30) du plateau correspondant (12).

FIG. 1

FIG. 2

30

54

37

35

56

31

38

14

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- TW M448235

- US 20100116262 A1